# EUROPEAN PATENT SPECIFICATION

(11) **EP 4 021 696 B1**
(45) Date of publication and mention of the grant of the patent: **19.11.2025**
(21) Application number: 20772461.8
(22) Date of filing: 26.08.2020
(51) Int. Cl.: B29B 7/08, C08J 3/20, C08L 27/06, B29B 7/28, B29B 7/90, B29K 27/06, B29L 31/34, C08K 5/12, C08K 5/098, C08K 5/58

(54) **METHOD OF MAKING A HOMOGENEOUS MIXTURE OF POLYVINYL CHLORIDE SOLIDS AND ADDITIVE**
VERFAHREN ZUR HERSTELLUNG EINER HOMOGENEN MISCHUNG VON POLYVINYLCHLORIDFESTSTOFFEN UND ADDITIVEN
PROCÉDÉ DE PRÉPARATION D'UN MÉLANGE HOMOGÈNE DE SOLIDES DE POLYCHLORURE DE VINYLE ET ADDITIF

(30) Priority: 29.08.2019 US 201962893249 P; 29.08.2019 US 201962893258 P; 17.02.2020 US 202062977431 P
(43) Date of publication of application: 06.07.2022
(73) Proprietor: Dow Global Technologies LLC, Midland, MI 48674 (US)
(72) Inventor: CHAUDHARY, Bharat I., Collegeville, Pennsylvania 19426 (US); SENGUPTA, Saurav S., Collegeville, Pennsylvania 19426 (US)
(74) Representative: Boult Wade Tennant LLP
(86) International application number: PCT/US2020/047935
(87) International publication number: WO 2021/041501

(56) References cited:
- EP-A1- 2 006 332
- WO-A1-2010/013851
- CN-A- 101 570 603
- KR-A- 20180 079 635
- US-A1- 2009 201 759
- US-A1- 2010 152 326
- US-A1- 2017 121 514

## Description

### FIELD

Mixing polyvinyl chloride solids with additives.

### INTRODUCTION

Patents and patent application publications in or about the field include US 7,188,993 B1; US 7,420,118 B2; US7,695,817 B2; US 8,124,309 B2; US 8,435,714 B2; US 8,680,177 B2; US 8,889,331 B2; US 9,223,236 B2; US 9,593,919 B2; US 9,926,427 B2; US 9,957,360 B2. Non-patent publications in or about the field include Assessment of extrusion-sonication process on flame retardant polypropylene by rheological characterization, by G. Sanchez-Olivares, et al. AIMS Materials Science, 2016; vol. 3, no. 2, pages 620 to 633; and ENHANCED DISPERSION OF PARTICLE ADDITIVE INTO POLYMERS USING TWIN SCREW EXTRUSION WITH ULTRASOUND ASSISTANCE, by K. Tarverdi, et al., SPE ANTEC Anaheim 2017, pages 1058 to 1062. Also, Bharat Indu Chaudhary, et al., Dialkyl furan-2,5-dicarboxylates, epoxidized fatty acid esters and their mixtures as bio-based plasticizers for poly(vinylchloride) [sic], J. Applied Polymer Sci., 2015, DOI: 10..1002/APP:42382 (pages 1 to 6 of 6) ("Chaudhary et al."). KR 2018 0079635 A refers to a method for producing an ionomer-coated carbon structure, and to a carbon structure coated with the ionomer. US 2009/201759 A1 refers to powder coatings, and specifically to antimicrobial powder coatings and powder coatings that require the addition of small quantities of uniformly dispersed additives in the final coating. US 2010/152326 A1 refers to processes for preparing dispersions of substances in liquid mediums.

Polyvinyl chloride ("PVC") solids in the absence of any additive tend to have rigid structures at ambient temperature. Over time at elevated temperatures less than the melting temperature of the PVC solids they tend to suffer degradation or decomposition. A liquid or solids additive, such as a liquid or solids heat stabilizer, plasticizer, or antioxidant, or solids filler (e.g., calcined kaolin clay or antimony trioxide) may be added to the PVC solids to inhibit degradation or decomposition of the PVC solids at the elevated temperature, or to improve its properties such as to increase electrical insulation resistance or flame resistance. A liquid plasticizer or solid flexibilizer is added to the PVC solids to increase their flexibility, workability, and/or distensibility and/or to modify properties of the PVC solids during melt processing (e.g., extruding). If a suspension grade of PVC solids is used, any liquid additive present is already imbibed into pores of the PVC solids to form a PVC solids/imbibed liquid additive combination prior to the melt processing of the combination.

Prior methods of adding a liquid or solids additive to PVC solids rely on mechanical agitation to dry blend the PVC solids and the liquid or solids additive together to give a PVC solids/additive composite (PVC solids/additive(s) composite). The mechanical agitation dry-blending method uses a physical object to physically apply a motive force to preheated PVC solids and preheated liquid or solids additive (e.g., using a blade, paddle, or rotor in a stirred tank device or mixer device, collectively "mechanical agitator") until a homogeneous mixture is made wherein all of the liquid or solids additive has been mechanically blended and (if liquid) absorbed into the PVC solids. This is achieved when the surfaces of the PVC solids/additive(s) composite appear dry (see Preparation of Flexible PVC Compounds in Chaudhary et al.). Depending on the composition of the liquid additive and amount of liquid additive relative to amount of the PVC solids, as well as the mechanical agitator's set temperature (typically from 80° to 110° C.) the mechanical agitation dry-blending method may need from 4 to 18 minutes to reach the state of a dry-looking composite (Figure 2 of Chaudhary et al.). The resulting PVC solids/additive(s) composite desirably is a free-flowing powder.

The PVC solids/additive(s) composite is then melted and mixed in an extruder, typically at a temperature from 150° to 200° C., and the resulting formulation is extruded to give a shaped PVC product. An example of the shaped PVC product is a PVC-based insulation layer of a power cable comprising a conductive core at least partially covered by the PVC-based insulation layer.

### SUMMARY

We discovered a mechanical agitation-free method of making a homogeneous mixture of polyvinyl chloride solids and at least one liquid additive and/or particulate solid additive without mechanically-agitating or melting the polyvinyl chloride solids during the making. The method comprises applying acoustic energy at a frequency of from 20 to 100 hertz to a heterogeneous mixture comprising the polyvinyl chloride solids and the at least one liquid additive and/or particulate solid additive for a period of time sufficient to substantially intermix the polyvinyl chloride solids and the liquid additive and/or particulate solid additive, while maintaining temperature of the heterogeneous mixture (and, optionally, maintaining temperature of the homogeneous mixture made therefrom) above the freezing point of the liquid additive, below the melting point of the particulate solid additive, and below the melting temperature of the polyvinyl chloride solids, thereby making the homogeneous mixture without mechanically-agitating or melting the polyvinyl chloride solids.

### DETAILED DESCRIPTION

A mechanical agitation-free method of making a homogeneous mixture of polyvinyl chloride solids (particulate PVC resin) and at least one liquid additive and/or particulate solid additive without mechanically-agitating or melting the polyvinyl chloride solids during the making. The method comprises applying acoustic energy at a frequency of from 20 to 100 hertz to a heterogeneous mixture comprising the polyvinyl chloride solids and the at least one liquid additive and/or particulate solid additive for a period of time sufficient to substantially intermix the polyvinyl chloride solids and the liquid additive and/or particulate solid additive, while maintaining temperature of the heterogeneous mixture (and, optionally, maintaining temperature of the homogeneous mixture made therefrom) above the freezing point of the liquid additive, below the melting point of the particulate solid additive, and below the melting temperature of the polyvinyl chloride solids, thereby making the homogeneous mixture without mechanically-agitating or melting the polyvinyl chloride solids. The particulate solid additive is different than the polyvinyl chloride solids. The method may further comprise the limitation wherein the heterogeneous mixture is not mechanically agitated (not mixed by mechanical means) during the applying acoustic energy step.

The intermixing of the polyvinyl chloride solids and the liquid additive and or particulate solid additive means uniformly distributing by force of acoustic energy the liquid additive and/or particulate solid additive with, into and throughout the polyvinyl chloride solids. Each additive that is present in the heterogeneous mixture is intermixed into the PVC solids, as the embodiment may be. For example, each of one or more of the liquid additive is intermixed into the PVC solids if there is no particulate solid additive, or each of one or more of the particulate solid additive is intermixed into the PVC solids if there is no liquid additive, or each of at least one of the liquid additive and at least one of the particulate solid additive is intermixed into the PVC solids if there is both the liquid additive and the particulate solid additive.

For a given liquid additive and/or particulate solid additive composition and amount relative to the amount of PVC solids, surprisingly, the mechanical agitation-free method can make the homogeneous mixture significantly faster (e.g., in from 90% to 10% of the time) than does the prior mechanical agitation dry-blending method. In some aspects the method makes the homogeneous mixture in from 0.5 to 5 minutes, alternatively from 1 to 3.4 minutes, alternatively from 1.5 to 3.1 minutes. The liquid additive may be at least one of a liquid heat stabilizer, a liquid plasticizer, a liquid antioxidant, and a liquid flame retardant; alternatively at least one of a liquid heat stabilizer and a liquid plasticizer. The particulate solid additive may be a solid silanol condensation catalyst; a solid antioxidant; a solid heat stabilizer; a solid colorant; a solid scorch retardant; a solid stabilizer for stabilizing the homogeneous mixture against effects of ultraviolet light (UV stabilizer); a solid processing aid; a solid flame retardant; a solid polymer that is not a PVC resin; a solid organic peroxide, a solid crosslinking coagent; or a solid moisture generator agent. The particulate solid additive may be in any divided form such as in the form of a powder, flakes, granules, pellets, or a combination of any two or more thereof.

Additional aspects follow; some are numbered below for ease of reference.

Aspect 1. A mechanical agitation-free method of making a homogeneous mixture of polyvinyl chloride solids and a liquid additive and/or particulate solid additive without melting the polyvinyl chloride solids during the making, the mechanical agitation-free method comprising applying acoustic energy at a frequency of from 20 to 100 hertz (Hz) to a first heterogeneous mixture comprising the polyvinyl chloride solids and the liquid additive and/or particulate solid additive for a period of time that is effective to substantially intermix the polyvinyl chloride solids and the liquid additive and/or particulate solid additive while maintaining temperature of the first heterogeneous mixture (and, optionally, maintaining temperature of the homogeneous mixture made therefrom) above the freezing point of the liquid additive, below the melting point of the particulate solid additive, and below the melting temperature of the polyvinyl chloride solids, thereby making a first homogeneous mixture comprising the polyvinyl chloride solids and the liquid additive and/or particulate solid additive without mechanically agitating or melting the polyvinyl chloride solids. The acoustic energy is at an acoustic intensity that is sufficient to move materials (the PVC solids and liquid additive) with sufficient amplitude that is effective for the intermixing.

Aspect 2. The method of aspect 1 wherein the liquid additive is a liquid heat stabilizer, a liquid plasticizer, a liquid antioxidant, a liquid flame retardant, or a combination of any two or more thereof.

Aspect 3. The method of aspect 1 or 2 wherein the applying step is characterized by any one of features (i) to (v): (i) the frequency is from 50 to 70 Hz, alternatively from 55 to 65 Hz, alternatively from 58 to 62 Hz, alternatively from 59 to 61 Hz; (ii) the period of time is from 0.5 minute to 4 hours, alternatively from 0.5 minute to 2 hours, alternatively from 1 minute to 60 minutes; (iii) both (i) and (ii); (iv) the maintaining temperature of the first heterogeneous mixture below the melting temperature of the polyvinyl chloride solids comprises maintaining temperature of the first heterogeneous mixture at from 10° to 119° C., alternatively from 15° to 114° C., alternatively from 20.0° to 110° C., alternatively from 40.0° to 100.0° C., alternatively from 60.0° to 90.0° C., alternatively from 80.0° to 110° C., alternatively from 20.0° to 29.9° C. (e.g., 25° C. ± 3° C.); and (v) both (iv) and any one of (i) to (iii). The frequency is set by the acoustic mixer.

Aspect 4. The method of any one of aspects 1 to 3 wherein the polyvinyl chloride solids of the first heterogeneous mixture are characterized by a physical form (i.e., solid particulate form) that is a powder, flakes, granules, pellets, or a combination of any two or more thereof and by a melting temperature that is from 100° to 260° C., alternatively from 120° to 240° C., alternatively from 130° to 230° C.; and the liquid additive is characterized by a freezing point of less than 20° C. or by a melting point from 20° to 99° C.; and the first heterogeneous mixture is maintained at a temperature greater than the freezing point or melting point of the liquid additive and less than 119° C. during the applying step.

Aspect 5. The method of any one of aspects 1 to 4 wherein the polyvinyl chloride composition of the polyvinyl chloride solids (i.e., particulate form of polyvinyl chloride polymer) comprises: a polyvinyl chloride homopolymer (hPVC); a chlorinated poly(vinyl chloride) polymer (CPVC); or a blend of from 51 to 99.99 wt% hPVC and from 0.01 to 49 wt% of a polymer selected from CPVC and a polyolefin (polyolefin is a halogen-free polymer made from hydrocarbon olefin monomers). In some embodiments the polyolefin may be chlorinated, such as a chlorinated polyethylene. Chlorinated polyethylene is different in composition and properties than polyvinyl chloride solids.

Aspect 6. The method of any one of aspects 1 to 5, having any one of limitations (i) to (iv): (i) wherein the liquid additive is a liquid heat stabilizer that is a calcium zinc mixed metal fatty acid carboxylate or a metal mercaptide; (ii) wherein the liquid additive is a liquid plasticizer that is a liquid carboxylic ester that is free of a sulfur atom and a phenolic hydroxyl group; (iii) wherein the liquid additive is a liquid plasticizer that is a liquid epoxidized fatty acid ester; and (iv) a combination of any two or three of (i) to (iii). The liquid carboxylic ester may be a liquid monocarboxylic monoester, a liquid dicarboxylic diester, or a liquid tricarboxylic trimester.

Aspect 7. The method of any one of aspects 1 to 6 wherein the liquid additive is a liquid plasticizer, wherein the liquid plasticizer is selected from: a liquid epoxidized fatty acid ester, a liquid acetyl trialkyl citrate, a liquid alkyl benzoate, a liquid dialkyl adipate, a liquid dialkyl azelate, a liquid dialkyl cyclohexane-dicarboxylate, a liquid dialkyl maleate, a liquid dialkyl phthalate, a liquid dialkyl sebacate, a liquid dialkyl succinate, a liquid dialkyl terephthalate, a liquid dialkyl tetrahydrofuran-dicarboxylate, a liquid trialkyl citrate, a liquid trialkyl trimellitate, and a combination of any two or more thereof.

Aspect 8. The method of any one of aspects 1 to 7 wherein the particulate solid additive is selected from a solid heat stabilizer (e.g., an epoxidized material or a mixture of metal salts); a solid silanol condensation catalyst (e.g., decanesulfonic acid or toluenesulfonic acid); a solid antioxidant (e.g., 2,2'-thiobis(6-t-butyl-4-methylphenol); a solid colorant (e.g., carbon black or TiO₂); a solid scorch retardant (e.g., a hydroquinone); a solid stabilizer for stabilizing the homogeneous mixture against effects of ultraviolet light (UV stabilizer), such as a solid hindered amine light stabilizer (HALS) (e.g., poly[[6-[(1,1,3,3-tetramethylbutyl)amino]-1,3,5-triazine-2,4-diyl][(2,2,6,6-tetramethyl-4-piperidinyl)imino]-1,6 hexanediyl[(2,2,6,6-tetramethyl-4-piperidinyl)imino]]); a solid processing aid (e.g., N,N'-ethylene bis(stearamide)); a solid flame retardant (e.g., a metal hydrate); a solid polymer that is not a PVC resin (e.g., an polyethylene homopolymer or an ethylene/propylene copolymer); a solid organic peroxide (e.g., dicumyl peroxide); a solid crosslinking coagent (e.g., triallyl isocyanurate); and a solid moisture generator agent (e.g., alumina trihydrate (Al₂O₃·3H₂O) or calcium oxalate monohydrate). In some embodiments the first heterogeneous mixture comprises at least one liquid additive and at least one particulate solid additive. In some embodiments the liquid additive is not a liquid heat stabilizer or a liquid plasticizer. The liquid additive may be a liquid antioxidant or a liquid flame retardant.

Aspect 9. The method of any one of aspects 1 to 8 wherein the liquid additive is a liquid at 23° ± 1° C. and wherein the particulate solid additive is a solid at 23° ± 1° C.

Aspect 10. The method of any one of aspects 1 to 8 wherein the liquid additive is a lower-melting solid additive having a melting point from 25° to 110° C., the method further comprising, before the applying step, making the first heterogeneous mixture by contacting the polyvinyl chloride solids with the lower-melting solid additive so as to make a heterogeneous solids pre-mixture, and melting the lower-melting solid additive without melting the polyvinyl chloride solids so as to make the first heterogeneous mixture. The lower-melting solid additive may have a melting point from 30.0° to 109° C., alternatively from 40.0° to 79.9° C, alternatively from 30.0° to 49.9° C. Prior to the contacting step (i) or (ii), the polyvinyl chloride solids to be used in the contacting step (i) may be free of the at least one of the liquid heat stabilizer and/or the liquid plasticizer.

Aspect 11. The method of any one of aspects 1 to 10 further comprising a step of contacting the first homogeneous mixture with at least one particulate solid additive that is different than the polyvinyl chloride solids to make a second heterogeneous mixture comprising the first homogeneous mixture and the at least one particulate solid additive; and then applying acoustic energy at a frequency of from 20 to 100 Hz that is effective to substantially intermix the same while maintaining temperature of the second heterogeneous mixture above the freezing point of the liquid additive and below the melting temperature of the polyvinyl chloride solids, thereby making a second homogeneous mixture comprising the polyvinyl chloride solids, the liquid additive, and the at least one particulate solid additive, without mechanically agitating or melting the polyvinyl chloride polymer solids during the making steps. When the liquid additive is a lower-melting solid, the method may further comprise a feature without solidifying the liquid additive.

Aspect 12. The method of any one of aspects 1 to 11 further comprising a subsequent step of melting the polyvinyl chloride solids in the homogeneous mixture to make a melt mixture; shaping the melt mixture to give a shaped melt mixture; and cooling the shaped melt mixture to give a shaped solid. The melt mixture may be at a temperature from 150° to 200° C. The shaped solid may be useful as manufactured article. The shaping may comprise coating, extruding, or molding. The homogeneous mixture may be the first or second made homogeneous mixture, as the numbered aspect may be. The shaping step may comprise extruding the melt mixture as a coating onto a conductive core (e.g., a wire, fiber optic, or both), and allowing the coating to solidify to make a coated conductor comprising the conductive core and a coating-shaped solid at least partially covering the conductive core. The method may further comprise curing (crosslinking) the coating-shaped solid so as to give a coated conductor comprising the conductive core and a coating-shaped cured product at least partially covering the conductive core. Additional embodiments include the shaped product prepared by the method of aspect 12.

The applying acoustic energy to the polyvinyl chloride solids and the liquid additive may cause the temperature of the polyvinyl chloride solids and the liquid additive to increase (e.g., due to heat of friction and/or intermixing).

The method may further comprise a feature (limitation) wherein, just before starting the applying acoustic energy step, at least one of the polyvinyl chloride solids and the liquid additive is at ambient temperature or greater than ambient temperature (as a result of the at least one of the polyvinyl chloride solids and the liquid additive having been preheated). Just before starting the applying acoustic energy step, the at least one of the polyvinyl chloride solids and the liquid additive may be at a temperature from 19° to 120° C., alternatively from 19° to 50° C., alternatively from 19° to 27° C., alternatively from 22° to 24° C., alternatively from 40.0° to 100.0° C., alternatively from 50° to 120° C., alternatively from 55° to 114° C., alternatively from 60° to 90° C., alternatively from 80° to 110° C. (e.g., 60°, 90°, or 110° C.).

The method may further comprise, before the applying acoustic energy step, a step of preheating the at least one of the polyvinyl chloride solids and the liquid additive to give at least one of a preheated PVC solids and a preheated liquid additive, respectively, at a temperature from 40° to 120° C., alternatively from 50° to 120° C., alternatively from 40° to 110° C., alternatively from 55° to 114° C., alternatively from 60° to 90° C., alternatively from 80° to 110° C. (e.g., 60°, 90°, or 110° C.). The preheating step may comprise preheating the PVC solids, but not the liquid additive; alternatively preheating the at least one liquid additive (e.g., the liquid heat stabilizer, the liquid plasticizer, the liquid antioxidant, the liquid flame retardant, or the combination of any two or more thereof) but not the PVC solids; alternatively preheating both the PVC solids and at least one liquid additive (e.g., the liquid heat stabilizer, the liquid plasticizer, or both). The at least one preheated PVC solids and preheated liquid additive may then be subjected to the applying acoustic energy step according to the method.

The method may comprise applying acoustic energy to a preheated heterogeneous mixture of liquid plasticizer and a preheated homogeneous mixture of PVC solids and liquid heat stabilizer, wherein at the start of the applying acoustic energy step, the preheated heterogeneous mixture is at a temperature from 50° to 120° C., alternatively from 55° to 114° C. (e.g., 60°, 90°, or 110° C.). The method may further comprise a preliminary step of making the preheated homogeneous mixture of the liquid heat stabilizer and liquid plasticizer by applying acoustic energy to a lower-temperature, liquid plasticizer-free heterogeneous mixture of the PVC solids and the liquid heat stabilizer (lacks liquid plasticizer) to give a lower-temperature, liquid plasticizer-free homogeneous mixture of PVC solids and liquid heat stabilizer at a temperature from 19° to 50° C., alternatively from 19° to 27° C., alternatively from 22° to 24° C., wherein at the start of the preliminary step the lower-temperature, liquid plasticizer-free heterogeneous mixture of PVC solids and liquid heat stabilizer is at a temperature from 19° to 50° C., alternatively from 19° to 27° C., alternatively from 22° to 24° C.; and heating the lower-temperature, liquid plasticizer-free homogeneous mixture to give the preheated homogeneous mixture.

The method may further comprise a feature without mechanically moving the polyvinyl chloride solids or heterogeneous mixture during the applying step. The method may further comprise a feature without allowing the polyvinyl chloride solids to passively absorb, soak or imbibe the liquid additive. The method may further comprise, after the applying step, a feature without solidifying the liquid additive that has/have been taken into the PVC solids.

The polyvinyl chloride solids may have a melting temperature at which melting begins or starts that is 100° C. or higher, alternatively greater than 110° C., alternatively greater than 120° C. The polyvinyl chloride solids may have a melting temperature at which melting ends or completes of 260° C. or lower, alternatively 230° C. or lower, alternatively 200° C. or lower. The liquid additive may have a freezing point less than 30.0° C., alternatively less than 20.0° C., alternatively less than 15° C., alternatively less than 5° C. The freezing point of the liquid additive may be at least -80° C., alternatively at least -50° C., alternatively at least -10° C.

The mechanical agitation-free method may further comprise a feature without mechanically moving the polyvinyl chloride solids or heterogeneous mixture during the applying step. Mechanically moving means putting in motion by applying, whether manually or via a machine, a direct contact force wherein a physical object (e.g., a stirrer paddle, a screw, a plunger, or a blender) touches and thereby moves a material. Examples of mechanically moving are stirring, screw mixing, plunger mixing, blender mixing, and other direct physically contacting. The contact force does not include electromagnetic force, gravity, acoustic force, and convective force.

The mechanical agitation-free method may further comprise a feature substantially without or completely without passively absorbing, soaking, or imbibing the liquid additive into the polyvinyl chloride solids during the applying step. Soaking requires miscibility of the liquid additive in the polyvinyl chloride solids and effective soaking conditions. Such soaking conditions comprise a sufficient period of time (e.g., 8 to 16 hours) and a sufficient temperature from ambient temperature (e.g., 20° C.) to an elevated temperature (e.g., from 60° to 120° C.) to allow migration of the liquid additive into the polyvinyl chloride solids.

The mechanical agitation-free method makes the homogeneous mixture in an acoustic mixer device, which is free of components that could interfere with or dampen the acoustic energy of the applying step and free of mechanical agitation during the acoustic mixing. Acoustic mixer devices for various scale uses from lab bench to commercial manufacturing may be available commercially, including resonant acoustic mixers from Resodyn Acoustic Mixers, Butte, Montana, USA.

The mechanical agitation-free method makes the homogeneous mixture also without melting the polyvinyl chloride solids.

In a practical sense achieving the homogeneity of the homogeneous mixture made by the method may be recognized be visual inspection or by sampling of the mixture as it transitions from a heterogeneous to a homogeneous state, and measuring a property of the sample. For example, homogeneity is achieved when the sampling error of the measurement is negligible or identical compared to the total error of the measurement. All other things being equal, (i) the greater the acoustic energy, the shorter the period of time needed to achieve homogeneity, and vice versa; and (ii) the closer is the frequency to a resonating with the polymer solids, the shorter the period of time needed to achieve homogeneity, and vice versa.

The mechanical agitation-free method may comprise applying acoustic energy until the liquid additive is completely dispersed around and substantially uniformly taken up or into the polyvinyl chloride solids such that the surfaces of the polyvinyl chloride solids, viewed with the naked eye, are "dry" or free of the liquid additive. Virtually all accessible surfaces of the polyvinyl chloride polymer solids may have at least some liquid additive taken on (adsorbed) thereon, although the amounts of adsorbed liquid additive may vary across the surfaces. The acoustic mixing may accelerate this taking up and into.

The mechanical agitation-free method enables making a homogeneous mixture comprising the polyvinyl chloride solids and the liquid additive without using mechanical agitation or melt extrusion or melt compounding, which require mechanically moving and melting the polyvinyl chloride solids. Thus, the thermal history of the homogeneous mixture made by the method is less harmful (e.g., less oxidative degradation) than the thermal history of a comparative homogeneous mixture made by melt extrusion or melt compounding. For example, the homogeneous mixture made by the method may have improved mechanical properties (e.g., higher tensile strength, greater elongation-at-break) before and/or after heat aging thereof.

Without being bound by theory, it is believed that the applying acoustic energy at the frequency of from 20 to 100 Hz generates sound waves that cause the polyvinyl chloride solids to oscillate rapidly. The sound waves cause the PVC solids to experience a relatively large physical displacement without being mechanically agitated. The extent of the physical displacement may be characterized by its magnitude of movement and frequency of oscillation. This oscillating of the polyvinyl chloride solids results in their rapid intermixing with the liquid additive to form the first homogeneous mixture. The first homogeneous mixture is thus made without solidifying the liquid additive and, optionally, without mechanical mixing of the polyvinyl chloride solids and the liquid additive and without solidifying the liquid additive or mechanically agitating or melting the polyvinyl chloride solids. The mechanical agitation-free method is distinct from prior mixing methods, which rely on mechanical blending of solids (e.g., in a stirred tank device) or melts (e.g., in a twin-screw extruder device) of polyvinyl chlorides with liquid plasticizers.

Sound having a frequency less than 20 Hertz (Hz) is called "infrasound"; and from 20 Hz to 20 kilohertz (KHz), "acoustic"; and greater than 20 KHz (up to 200 megahertz (MHz) or higher), "ultrasound". Without being bound by theory it is believed that infrasound and ultrasound and acoustic sound above 100 Hz cannot, by itself, rapidly oscillate the polyvinyl chloride solids in the heterogeneous mixture in a way that would create the relatively large physical displacement thereof and thereby yield the homogeneous mixture. The applying acoustic energy at a frequency of from 20 to 100 Hz is called "acoustic mixing" herein.

The expression "the heterogeneous mixture" may refer to the first or second heterogeneous mixture of the numbered aspects or claims or to the heterogeneous mixture of unnumbered aspects, as the case may be. The total weight of all constituents in the heterogeneous mixture is 100.00 wt%.

The heterogeneous mixture. May be made by contacting neat polyvinyl chloride solids that are free of the liquid additive with liquid additive without homogenizing same. Alternatively, a second heterogeneous mixture may be made by contacting a homogeneous mixture, made by inventive acoustic mixing or comparative melt-mixing, with a second liquid additive (e.g., a second liquid additive that is not a heat stabilizer or a plasticizer) and/or a second particulate solid additive (e.g., a second particulate additive that is not a heat stabilizer or a flexibilizer) without homogenizing same. Alternatively, may be made by dehomogenizing a homogeneous mixture of the polyvinyl chloride solids and liquid additive such as by allowing the homogeneous mixture to stand at 25° C. for a period of time sufficient to result in a coalescing of some of the liquid additive in, or migration of the liquid additive to surfaces of, the polyvinyl chloride solids. Alternatively, may be made by heating a heterogeneous mixture of the polyvinyl chloride solids and the lower-melting solid additive having a melting temperature lower than the melting temperature of the polyvinyl chloride solids, the heating being to a temperature greater than the melting temperature of the lower-melting solid additive but less than the melting temperature of the polyvinyl chloride solids and for a period of time sufficient to melt at least some, alternatively all of the lower-melting solid additive.

The heterogeneous mixture may have never before been homogenized or may have been dehomogenized as described above. Either way, the heterogeneous mixture is a nonuniform, physical combination of matter, e.g., consisting of unblended or partially (incompletely) blended constituents. The homogenization of the dehomogenized mixture may reconstitute its predecessor homogeneous mixture without remelting the polyvinyl chloride.

The liquid additive may impart to the homogeneous mixture and/or to the polyvinyl chloride solids thereof at least one functional property as described herein.

The heterogeneous mixture, and thus the homogeneous mixture made therefrom by the mechanical agitation-free method, may be free of (i.e., may lack) the particulate solid additive. In these embodiments the heterogeneous mixture, and thus the homogeneous mixture made therefrom by the method, may consist essentially of, alternatively consist of, the polyvinyl chloride solids and the liquid additive.

Alternatively, the heterogeneous mixture, and thus the homogeneous mixture made therefrom by the mechanical agitation-free method, may further comprise the particulate solid additive that is different than the polyvinyl chloride solids. In these embodiments the heterogeneous mixture and homogeneous mixture made therefrom by the method may consist essentially of, alternatively consist of, the polyvinyl chloride solids, liquid additive, and at least one such particulate solid additive.

The first heterogeneous mixture used in the step of applying acoustic energy may be freshly prepared. The "freshly prepared" means that temperature of the constituents of the first heterogeneous mixture may be sufficiently low (less than 120° C.) and/or the time between the contacting step (i) or (ii) and start of the applying acoustic energy step may be sufficiently short so as to prevent the liquid additive from having the length of time necessary for passively absorbing, soaking, or imbibing, if that would be possible, into the polyvinyl chloride solids to any significant extent or to any extent (e.g., less than 5% of the total amount of the liquid additive). The sufficiently short time between the contacting step and start of the applying acoustic energy step may be less than 30 minutes, alternatively less than 15 minutes, alternatively less than 10 minutes, alternatively less than 5 minutes. Alternatively, the first heterogeneous mixture used in the step of applying acoustic energy may be pre-aged. The "pre-aged" means that temperature may be sufficiently low and/or the time between the contacting step (i) or (ii) and start of the applying acoustic energy step may be sufficiently long so as to allow the liquid additive to have a length of time necessary for passively absorbing, soaking, or imbibing, if possible, some, but not all, of the liquid additive into the polyvinyl chloride solids to a significant extent or measurable. The sufficiently long time between the contacting step and start of the applying acoustic energy step may be at least 30 minutes, alternatively greater than 60 minutes, alternatively greater than 120 minutes.

The first heterogeneous mixture and the first homogeneous mixture may comprise the polyvinyl chloride solids and one liquid additive. Alternatively, the first heterogeneous mixture and the first homogeneous mixture may comprise the polyvinyl chloride solids and two or more liquid additives. When the first heterogeneous mixture and the first homogeneous mixture comprise the constituents PVC solids and one liquid additive but not two liquid additives), the mechanical agitation-free method may further comprise adding a second liquid additive and/or second particulate solid additive to the first homogeneous mixture to give a second heterogeneous mixture, and applying acoustic energy to the second heterogeneous mixture to give a second homogeneous mixture of PVC solids and two liquid additives.

In the homogeneous mixture, the total weight of the PVC solids and liquid additive will equal the weight of the heterogeneous mixture from which it was made. The total weight of all constituents in the homogeneous mixture is 100.00 wt%. Generally, the wt% of each of the constituents in the homogeneous mixture is equal to the wt% of the same constituents in the heterogeneous mixture from which it is made by the mechanical agitation-free method.

The polyvinyl chloride solids. A divided, solid-state matter (i.e., solid particulates) form of polymer macromolecules that independently comprise at least 5, alternatively from 10 to 200,000 constituent units derived from polymerizing vinyl chloride.

The polyvinyl chloride solids may be porous or non-porous. The polyvinyl chloride solids may comprise a powder, flakes, granules, pellets, or a combination of any two or more thereof. In some aspects the particulate solid additive is in the form of any one of a powder, flakes, and granules; alternatively any one of a powder, flakes, and pellets; alternatively any one of a powder, granules, and pellets; alternatively any one of a flakes, granules, and pellets. In some aspects the particulate solid additive is in the form of a powder, alternatively flakes, alternatively granules, alternatively pellets, alternatively a combination of a powder and any one of flakes, granules, and pellets.

The polyvinyl chloride ("PVC") solids. The PVC solids are in need of the liquid additive and/or a particulate solid additive. For example, the PVC solids may be in need of the liquid heat stabilizer and/or the liquid plasticizer. Alternatively, the PVC solids may be in need of the particulate solid heat stabilizer and/or the particulate solid plasticizer or flexibilizer. In the absence of a heat stabilizer the PVC solids tend to suffer degradation or decomposition (e.g., to inhibit oxidation of the PVC solids and/or reduce emission of chlorine-containing compounds) such as when heated to operating temperatures of melt extrusion processes or, for example, when heated at elevated temperatures for heat-aging coated conductors containing a layer composed of PVC. In absence of a plasticizer or flexibilizer the PVC solids tend to have rigid structures. The liquid or particulate solid heat stabilizer may be used to inhibit degradation or decomposition of the PVC solids. The liquid or particulate solid plasticizer may be used to increase the flexibility, workability, and/or distensibility of the PVC solids and/or to modify the properties of a melt of the PVC solids. The liquid or particulate solid plasticizer may reduce the melt viscosity, lower temperature of the second-order transition in differential scanning calorimetry, and/or lower the elastic modulus of the composition of the PVC solids. Other liquid or particulate solid additives that are not the liquid or particulate solid heat stabilizer or liquid or particulate solid plasticizer (e.g., a liquid antioxidant or particulate solid or liquid or particulate solid flame retardant) may provide different benefits (e.g., antioxidizing or flame retarding benefit). The particulate solid heat stabilizer or particulate solid antioxidant may be used instead of, alternatively in addition to, the liquid heat stabilizer or liquid antioxidant, respectively.

The term "polyvinyl chloride", also known as "poly(vinyl chloride)" or "PVC", means a macromolecule, or a collection of macromolecules, containing constituent units derived from polymerization of the monomer, vinyl chloride. Vinyl chloride is of structural formula H₂C=C(H)CI.

The composition of the PVC solids may be a homopolymer or copolymer. In the polyvinyl chloride homopolymer, all the constituent units are derived from polymerization of vinyl chloride. In the polyvinyl chloride copolymer, a majority by weight of constituent units are derived from the polymerization of vinyl chloride and a minority by weight of constituent units are derived from an olefin monomer such as ethylene, propylene, or a (C₄-C₂₀)alpha-olefin (i.e., a 1-alkene having from 4 to 20 carbon atoms).

The composition of the PVC solids may be unsubstituted or substituted with a substituent. An unsubstituted PVC consists of carbon, hydrogen, and chlorine atoms wherein all the chlorine atoms are derived from polymerization of vinyl chloride. A substituted PVC is made by reacting an unsubstituted PVC with a chemically-modifying reagent to give a substituted PVC that is a chemically-modified PVC or by grafting a functional group or different polymer onto the unsubstituted PVC to give a substituted PVC that is a grafted PVC. An example of the chemically-modifying agent is a chlorinating agent and the resulting chemically-modified PVC is a chlorinated polyvinyl chloride (CPVC). An example of the functional group is a trialkoxysilyl group and the grafted PVC is a trialkoxysilyl-functional PVC.

The polyvinyl chloride of the PVC solids is any macromolecule comprising constituent units derived from polymerizing an olefin-functional monomer or copolymerizing at least two olefin-functional monomers, or a mixture of such macromolecules. The polyvinyl chloride may be amorphous (i.e., having a glass transition temperature but no melting point in differential scanning calorimetry (DSC)) or semi-crystalline (i.e., having a glass transition temperature and a melting point in DSC).

Examples of suitable polyvinyl chlorides of the PVC solids are poly(vinyl chloride) polymers (PVC), chlorinated poly(vinyl chloride) polymers (CPVC), and copolymers of vinyl chloride and a copolymerizable ethylenically unsaturated monomer. Examples of the copolymerizable ethylenically unsaturated monomer are vinyl acetate, vinyl butyrate, vinyl benzoate, vinylidene chloride, an alkyl fumarate, an alkyl maleate, vinyl propionate, an alkyl acrylate, an alkyl methacrylate, methyl alpha-chloroacrylate, styrene, trichloroethylene, a vinyl ether, a vinyl ketone, 1-fluoro-2-chloroethylene, acrylonitrile, chloroacrylonitrile, allylidene diacetate, and chloroallylidene diacetate, and mixtures of any two or more thereof. See US 10,119,015 B2 for details. The polyvinyl chlorides may be thermoplastic elastomers or compatibilizers such as those given in US 8,697,787 B2. The polyvinyl chloride that is a copolymer may be a block copolymer or a random copolymer.

A monomer-based polymer such as an "ethylene-based polymer" or a "propylene-based polymer" means a macromolecule comprising from 51 to 100 wt% of constituent units derived from the monomer (e.g., the ethylene or propylene) and from 0 to 49 wt% of constituent units derived from one or more comonomers that are different than the monomer.

The polyvinyl chloride composition may be the hPVC or CPVC, alternatively the hPVC or the blend, alternatively the CPVC or the blend, alternatively the hPVC, alternatively the CPVC, alternatively the blend. When the polyvinyl chloride solids are hPVC solids, the hPVC solids may be free of CPVC, a polyolefin, or both CPVC and polyolefin. The polyolefin of the blend may be a polyethylene homopolymer; a polypropylene homopolymer; an ethylene/propylene copolymer; an ethylene/propylene/diene monomer (EPDM) terpolymer; or a poly(ethylene-co-1-alkene) copolymer wherein the 1-alkene is 1-butene, 1-hexene, or 1-octene. In some aspects the PVC solids are composed of PVC homopolymer ("hPVC").

The polyvinyl chloride solids of the first heterogeneous mixture (i.e., prior to the applying acoustic energy step) may be characterized by an average particle size of from 10 to 500 particles per gram (ppg), alternatively from 11 to 80 ppg, alternatively from 20 to 40 ppg, as measured by counting.

The heterogeneous and/or homogeneous mixture may comprise from 100 to 10 wt%, alternatively from 90 to 20 wt%, alternatively from 85 to 30 wt%, alternatively from 80 to 40 wt %, of PVC solids, based on the total weight of the homogeneous mixture.

The liquid additive may be the liquid heat stabilizer, liquid plasticizer, liquid antioxidant, or liquid flame retardant. Alternatively, the antioxidant may be a solid antioxidant or a combination of a liquid antioxidant and a solid antioxidant, or a combination of a liquid heat stabilizer and a solid antioxidant.

The liquid or particulate solid heat stabilizer. As used herein, a "heat stabilizer" is a compound, substance or material that, when incorporated in (dispersed within) the PVC solids, which are in need thereof, functions to increase the PVC solid's resistance to degrading and/or decomposition effects of elevated temperature (e.g., to inhibit oxidation of the PVC solids and/or reduce emission of chlorine-containing compounds). The liquid or particulate solid heat stabilizer is used for stabilizing the homogeneous mixture against harmful effects of heat. The liquid or particulate solid heat stabilizer may comprise a calcium zinc mixed metal fatty acid carboxylate or a metal mercaptide. The liquid or particulate solid heat stabilizer may comprise a liquid combination of constituents (i) to (iii): (i) a first metal salt, (ii) a second metal salt, and (iii) a liquid or particulate solid diketone. The combination of constituents (i) to (iii) may be in the form of a solution of solid (i) and solid (ii) dissolved in liquid diketone. The metal of each metal salt independently may be lithium, sodium, potassium, magnesium, calcium, strontium, barium, zinc, aluminum, or tin. The tin may be an alkyl-containing tin. Examples of suitable metal salts are metal carboxylates, such as metal stearates, metal laurates, metal oleates, metal maleate, metal benzoates, metal phosphates, such as stearyl phosphate, distearyl phosphate, phenyl phosphate, and diphenyl phosphate, and basic salts, carbonates, and sulfates thereof, metal oxides, and metal hydroxides thereof. The metal salts may be calcium stearate, zinc stearate, barium stearate, cadmium stearate, an organotin compound (such as dibutyltin dilaurate or dibutyltin dimaleate), or a combination of any two thereof. The metal of the first metal salt may be zinc and the metal of the second metal salt may be calcium or barium. The first metal salt may be zinc stearate and the second metal salt may be calcium stearate or barium stearate. The particulate solid heat stabilizer may be an epoxidized material such as an epoxidized fatty acid ester, such as an epoxidized triglyceride or an epoxidized fatty acid alkyl ester.

The (iii) liquid or particulate solid diketone may be a liquid or particulate solid β-diketone. Examples of suitable liquid or particulate solid diketones are acetylacetone, triacetylmethane-, 2,4,6-heptatrione, butanoylacetylmethane, lauroylacetylmethane, palmitoylacetylmethane, stearoylacetylmethane, phenylacetylacetylmethane, dicyclohexylcarbonylmethane, benzoylformylmethane, benzoylacetylmethane, dibenzoylmethane (Rhodiastab^{®} 83), palmitoyl benzoyl methane, stearoyl benzoyl methane, octylbenzoylmethane, bis(4-octylbenzoyl)methane, benzoyldiacetylmethane, 4-methoxybenzoylbenwylmethane, bis(4-carboxymethylbenzoyl)methane, 2-carboxymethylbenzoylacetyloctylmethane, dehydroacetic acid, cyclohexane-1,3-dione, 3,6-dimethyl-2,4-dioxycyclohexane-1-carboxylic acid methyl ester, 2-acetylcyclohexanone, dimedone, 2-benzoylcyclohexane, and any a combination of two or more thereof. An example of suitable combination is palmitoyl benzoyl methane and stearoyl benzoyl methane (Rhodiastab 50).

The liquid or particulate solid heat stabilizer may be lead-free (i.e., free of Pb atoms).

The heterogeneous and/or homogeneous mixture may comprise the liquid or particulate solid heat stabilizer and be free of the liquid or particulate solid plasticizer. The heterogeneous and/or homogeneous mixture may comprise the liquid or particulate solid heat stabilizer and the liquid or particulate solid plasticizer. When present, the liquid or particulate solid heat stabilizer may be present in the homogeneous mixture at from 0.1 to 10 wt%, alternatively from 0.2 to 7.0 wt%, alternatively from 0.4 to 5.0 wt %, based on the total weight of tile homogeneous mixture.

The liquid or particulate solid plasticizer. The particulate solid plasticizer may also be called a particulate solid flexiblizer. The liquid or particulate solid plasticizer, also called a softener, is a compound, substance or material that, when incorporated in (dispersed within) the PVC solids, which are in need thereof, functions to increase the PVC solid's flexibility, workability, and/or distensibility. Flexibility is ability to bend without breaking. Workability is ability to be shaped (e.g., cast, molded, extruded) without reverting, tearing or rupturing. Distensibility is ability to swell due to internal pressure.

The liquid or particulate solid plasticizer may be the liquid or particulate solid carboxylic ester. The liquid or particulate solid plasticizer may be the epoxidized fatty acid ester. The epoxidized fatty acid ester may be selected from a liquid epoxidized soybean oil, a liquid epoxidized linseed oil, and an epoxide of a fatty acid alkyl ester (such as one derived from soy bean oil).

The liquid or particulate solid plasticizer may be the liquid or particulate solid carboxylic ester selected from: a acetyl trialkyl citrate, a alkyl benzoate, a dialkyl adipate, a dialkyl azelate, a dialkyl cyclohexane-dicarboxylate, a dialkyl maleate, a dialkyl phthalate, a dialkyl sebacate, a dialkyl succinate, a dialkyl terephthalate, a dialkyl tetrahydrofuran-dicarboxylate, a trialkyl citrate, a trialkyl trimellitate, and a combination of any two or more thereof. Each alkyl group independently may be straight chain or branched unsubstituted alkyl and unsubstituted or substituted with from 1 to 3 halogen atoms. Each halogen atom independently may be F, Cl, Br, or I; alternatively F, Cl, or Br; alternatively Cl or Br; alternatively Br; alternatively Cl. Each alkyl group independently may be an unsubstituted (C₁-C₂₀)alkyl group, alternatively an unsubstituted (C₄-C₂₀)alkyl group, alternatively an unsubstituted (C₄-C₁₀)alkyl group, alternatively an unsubstituted (C₁₁-C₂₀)alkyl group. The acetyl trialkyl citrate may be acetyl tributyl citrate or acetyl trihexyl citrate. The alkyl benzoate may be a (C₁₀-C₂₀)alkyl benzoate. The dialkyl adipate may be dimethyl adipate, di(2-ethylhexyl) adipate, or dioctyl adipate. The dialkyl azelate may be di((C₁₀-C₂₀)alkyl) azelate. The dialkyl cyclohexane-dicarboxylate may be di(7-methyloctyl) cyclohexane-1,2-dicarboxylate. The dialkyl maleate may be dibutyl maleate or di(2-methylpropyl) maleate. The dialkyl phthalate may be di(2-ethylhexyl) phthalate, di(2-propylheptyl) phthalate, di(7-methyloctyl) phthalate, dibutyl phthalate, butyl benzyl phthalate, di(8-methylnonyl) phthalate, dioctyl phthalate, di(6-methylheptyl) phthalate, diethyl phthalate, di(2-methylpropyl) phthalate, or dihexyl phthalate. The dialkyl sebacate may be dibutyl sebacate. The dialkyl succinate may be di((C₁₀-C₂₀)alkyl) succinate. The dialkyl terephthalate may be dioctyl terephthalate. The dialkyl tetrahydrofuran-dicarboxylate may be di((C₁₀-C₂₀)alkyl) tetrahydrofuran-2,6-dicarboxylate. The trialkyl citrate may be trihexyl citrate or trimethyl citrate. The trialkyl trimellitate may be trimethyl trimellitate, tri(2-ethylhexyl) trimellitate, a mixture of tri(octyl) trimellitate and tri(decyl) trimellitate, or a mixture of tri(heptyl) trimellitate and trinonyl trimellitate. In some aspects the liquid or particulate solid plasticizer is the dialkyl phthalate, alternatively a (C₆-C₁₄)alkyl, alternatively a (C₈-C₁₂)alkyl, alternatively a (C₉-C₁₁)alkyl, alternatively a (C₁₀)alkyl, alternatively di(8-methylnonyl) phthalate. The di(8-methylnonyl) phthalate is also known as diisodecyl phthalate or "DIDP".

The heterogeneous and/or homogeneous mixture may comprise liquid or particulate solid plasticizer and be free of the liquid or particulate solid heat stabilizer. Alternatively, the heterogeneous and/or homogeneous mixture may comprise both. When present, the liquid or particulate solid plasticizer may be present in the homogeneous mixture at from 10 to 90 wt%, alternatively from 10 to 80 wt%, alternatively from 15 to 70 wt%, alternatively from 20 to 60 wt %, based on the total weight of the homogeneous mixture.

The heterogeneous mixture and homogeneous mixture made therefrom by the mechanical agitation-free method may contain at least one additional additive that is different than the PVC solids, the liquid or particulate solid heat stabilizer, and the liquid or particulate solid plasticizer. Each of the optional at least one additional additive independently may be a different liquid additive or a particulate solid additive.

The at least one additional liquid or particulate solid additive may be any one of additives: a filler (e.g., a clay, e.g., a calcined clay, e.g., a calcined kaolin clay); an antioxidant (e.g., octadecyl 3-(3,5-ditert-butyl-4-hydroxyphenyl)propionate); a flame retardant synergist (e.g., antimony trioxide); a flame retardant (e.g., a metal hydrate); a solid processing aid (e.g., N,N'-ethylene bis(stearamide) solid as Kemamide W-40); a colorant (e.g., carbon black or TiO₂); and a solid polymer that is not a PVC polymer (e.g., may be a polyethylene polymer, a polypropylene homopolymer or a propylene/ethylene copolymer). Each of the particulate solid additives may have a melting temperature at which melting begins or starts that is greater than 20.0° C., alternatively greater than 100° C., alternatively greater than 200° C. The at least one particulate solid additive may have a melting temperature at which melting ends or completes of at most 4,000° C., alternatively at most 2,000° C., alternatively at most 1,000° C., alternatively at most 500° C., alternatively at most 300° C.

The particulate solid additive. Substance that is not or does not contain a polyvinyl chloride polymer, i.e., is not any type of polymer or is a polymer wherein the constituent units are not derived from a monomer. The particulate solid additive may be characterized by a glass transition temperature, if any, and/or by a melting temperature greater than the melting temperature of the polyvinyl chloride solids, e.g., a melting temperature greater than 140° C., alternatively greater than 180° C. The actual glass transition temperature, if any, and melting temperature of the particulate solid additive is not important as long as it is/they are high enough that the particulate solid additive does not glass transition or flow or melt during the applying acoustic energy step. The heterogeneous mixture and homogeneous mixture may comprise zero particulate solid additive, alternatively one particulate solid additive, alternatively a combination of two or more different particulate solid additives. The particulate solid additive may be inorganic or organic. Examples are carbon black, carbon nanotubes, diamond powder, graphite, graphene, powdered metals, powdered metal oxides, solid flame retardants, silica, alumina, and silicate glass beads. In some aspects the heterogeneous mixture, the mechanical agitation-free method of making, and the homogeneous mixture made thereby is free of a particulate solid additive.

The particulate solid additive may be the particulate solid heat stabilizer or the particulate solid plasticizer. The additional additive may be a hydrotalcite, a zeolite a lubricant, a perchlorate, or a combination of any two or more thereof,

The term "solid" indicates a material that has a melting point or melting temperature or glass transition temperature that is greater than the operating temperature of the heterogeneous mixture during the applying acoustic energy step such that the particulate solid additive remains in solid form during the applying acoustic energy step. When the heterogeneous mixture and homogeneous mixture made therefrom by the mechanical agitation-free method contains both the liquid heat stabilizer and the particulate solid heat stabilizer, the latter functions as an auxiliary heat stabilizer therein. When the heterogeneous mixture and homogeneous mixture made therefrom by the method contains both the liquid plasticizer and the particulate solid plasticizer, the latter functions as an auxiliary plasticizer therein.

The term "stabilizer" means a chemical compound or material that inhibits or delays onset of degrading effects on a host material (e.g., a resin) of an energy source that the term is modified by. For example, a "light stabilizer" means a chemical compound or material that inhibits or delays onset of degrading effects of light, especially ultraviolet light, on the PVC solids. A "heat stabilizer" means a chemical compound or material that inhibits or delays onset of degrading effects of elevated temperatures on the PVC solids. The effects of a light stabilizer or a heat stabilizer on the host material (e.g., PVC solids) may be not include antioxidizing effects (that is in some embodiments the stabilizer is not also an antioxidant), alternatively may further comprise antioxidizing effects (that is in some embodiments the stabilizer is also an antioxidant).

Additive filler. The filler may be a solid. Examples are fumed silica (e.g., hydrophobic treated fumed silica) and a clay, e.g., a calcined clay, e.g., a calcined kaolin clay. The calcined kaolin clay may be dispersed as a filler in an insulation layer of a power cable, wherein the insulation layer comprises a composite of PVC and the clay. The heterogeneous and/or homogeneous mixture may be free of filler. When present, the filler may be from 0.1 to 50 wt%, alternatively from 0.1 to 25 wt%, alternatively from 0.3 to 25 wt%, alternatively 1 to 20 wt% of the total weight of the heterogeneous and/or homogeneous mixture.

Additive antioxidant: an organic molecule that inhibits oxidation, or a collection of such molecules. The antioxidant may be a solid or liquid compound. The antioxidant functions to provide antioxidizing properties to the heterogeneous or homogeneous mixture and/or a cured polymer product made by curing the homogeneous mixture. Examples are bis(4-(1-methyl-1-phenylethyl)phenyl)amine (e.g., NAUGARD 445); 2,2'-methylene-bis(4-methyl-6-t-butylphenol) (e.g., VANOX MBPC); 2,2'-thiobis(2-t-butyl-5-methylphenol (CAS No. 90-66-4; 4,4'-thiobis(2-t-butyl-5-methylphenol) (also known as 4,4'-thiobis(6-tert-butyl-m-cresol), CAS No. 96-69-5, commercially LOWINOX TBM-6); 2,2'-thiobis(6-t-butyl-4-methylphenol (CAS No. 90-66-4, commercially LOWINOX TBP-6); tris[(4-tert-butyl-3-hydroxy-2,6-dimethylphenyl)methyl]-1,3,5-triazine-2,4,6-trione (e.g., CYANOX 1790); pentaerythritol tetrakis(3-(3,5-bis(1,1-dimethylethyl)-4-hydroxyphenyl)propionate (e.g., IRGANOX 1010, CAS Number 6683-19-8); 3,5-bis(1,1-dimethylethyl)-4-hydroxybenzenepropanoic acid 2,2'-thiodiethanediyl ester (e.g., IRGANOX 1035, CAS Number 41484-35-9); distearyl thiodipropionate ("DSTDP"); dilauryl thiodipropionate (e.g., IRGANOX PS 800); stearyl 3-(3,5-di-t-butyl-4-hydroxyphenyl)propionate (e.g., IRGANOX 1076); 2,4-bis(dodecylthiomethyl)-6-methylphenol (IRGANOX 1726); 4,6-bis(octylthiomethyl)-o-cresol (e.g. IRGANOX 1520); and 2',3-bis[[3-[3,5-di-tert-butyl-4-hydroxyphenyl]propionyl]] propionohydrazide (IRGANOX 1024). The antioxidant may be 4,4'-thiobis(2-t-butyl-5-methylphenol) (also known as 4,4'-thiobis(6-tert-butyl-m-cresol); 2,2'-thiobis(6-t-butyl-4-methylphenol; tris[(4-tert-butyl-3-hydroxy-2,6-dimethylphenyl)methyl]-1,3,5-triazine-2,4,6-trione; distearyl thiodipropionate; or dilauryl thiodipropionate; or a combination of any two or more thereof. The combination may be tris[(4-tert-butyl-3-hydroxy-2,6-dimethylphenyl)methyl]-1,3,5-triazine-2,4,6-trione and distearyl thiodipropionate. The heterogeneous and/or homogeneous mixture may be free of antioxidant. When present, the antioxidant may be from 0.01 to 1.5 wt%, alternatively 0.1 to 1.0 wt% of the total weight of the heterogeneous and/or homogeneous mixture.

Additive flame retardant synergist (e.g., antimony trioxide). The heterogeneous and/or homogeneous mixture may be free of flame retardant synergist. When present it may be from 0.001 to 30.0 wt%, alternatively 0.01 to 20.0 wt%, alternatively 0.10 to 10.0 wt%, alternatively 0.15 to 5.0 wt%, alternatively 0.20 to 3.0 wt%, alternatively 0.30 to 1.0 wt% of the heterogeneous and/or homogeneous mixture.

Additive flame retardant. The flame retardant is a compound that inhibits or delays the spread of fire by suppressing chemical reactions in a flame. The flame retardant may be (1) a mineral, (2) an organohalogen compound, (3) an (organo)phosphorus compound; (4) a halogenated silicone; (5) a combination of any two or more of (1) to (4); (6) a combination of any one of (1) to (4) and the flame-retardant synergist (e.g., antimony trioxide). The heterogeneous and/or homogeneous mixture may be free of flame retardant. When present, the flame retardant may be from 0.1 to 80.0 wt%, alternatively 1 to 50.0 wt%; and alternatively 5 to 30.0 wt% of the heterogeneous and/or homogeneous mixture.

Additive a solid processing aid (e.g., N,N'-ethylene bis(stearamide) solid as Kemamide W-40); The heterogeneous and/or homogeneous mixture may be free of the solid processing aid. When present, the solid processing aid may be from 0.05 to 5 wt% of the heterogeneous and/or homogeneous mixture.

Additive a colorant. E.g., a pigment or dye. E.g., carbon black or titanium dioxide. The carbon black may be provided as a carbon black masterbatch that is a formulation of poly(1-butene-co-ethylene) copolymer (from ≥ 95 wt% to < 100 wt% of the total weight of the masterbatch) and carbon black (from > 0 wt% to ≤ 5 wt% of the total weight of the masterbatch. Carbon black is a divided form of paracrystalline carbon having a high surface area-to-volume ratio, but lower than that of activated carbon. Examples of carbon black are furnace carbon black, acetylene carbon black, conductive carbons (e.g., carbon fibers, carbon nanotubes, graphene, graphite, and expanded graphite platelets). The heterogeneous and/or homogeneous mixture may be free of colorant. When present colorant may be from 0.1 to 35 wt%, alternatively 1 to 10 wt% of the heterogeneous and/or homogeneous mixture.

The heterogeneous and/or homogeneous mixture may further comprise the polymer that is not a PVC polymer, alternatively not a PVC polymer or a styrenic polymer (which is not PVC solids). The polymer that is not a PVC polymer may be an ethylene-based polymer. Examples of suitable ethylene-based polymers are polyethylene homopolymers, ethylene/(C₄-C₂₀)alpha-olefin copolymers, ethylene/propylene copolymers, ethylene/propylene/diene monomer (EPDM) copolymers such as an ethylene/propylene/1,3-butadiene terpolymer, and ethylene/1-butene/styrene copolymers. Examples of suitable ethylene/(C₄-C₂₀)alpha-olefin copolymers are ethylene/1-butene copolymers, ethylene/1-hexene copolymers, and ethylene/1-octene copolymers. The ethylene-based polymers may be an ultra-low-density polyethylene (ULDPE), very low-density polyethylene (VLDPE), a linear low-density polyethylene (LLDPE), a low-density polyethylene (LDPE), a medium-density polyethylene (MDPE), a high-density polyethylene (HDPE), or an ultra-high-density polyethylene (UHDPE). The ethylene-based polymer may be chlorinated, such as (but not limited to) chlorinated polyethylene. Many of the ethylene-based polymers are sold by The Dow Chemical Company under trade names like AFFINITY, ATTANE, DOWLEX, ENGAGE, FLEXOMER, INFUSE, or VERSIFY. Other ethylene-based polymers are sold by other suppliers under trade names like TAFMER, EXCEED, and EXACT. The polymer may be a styrenic polymer, a rubber, a polyorganosiloxane such as a polydimethylsiloxane (PDMS), or a blend of any two or more thereof. The heterogeneous and/or homogeneous mixture may be free of the polymer that is not a PVC polymer. When present, the polymer that is not a PVC polymer may be from 0.1 to 25 wt%, alternatively 1 to 20 wt% of the total weight of the heterogeneous and/or homogeneous mixture.

The manufactured article. The manufactured article made from the homogeneous mixture may comprise a shaped form thereof. Examples are a coating on a substrate (e.g., a conductor such as a copper wire or optical glass fiber), a tape, a film, a layer of a laminate, a foam, and a pipe.

The coated conductor. The manufactured article may be the coated conductor, comprising a conductive core and a polymeric layer at least partially surrounding the conductive core, wherein at least a portion of the polymeric layer comprises the homogeneous mixture, or a cured or crosslinked polymer product of curing same. The entire polymeric layer may comprise the homogeneous mixture or the cured or crosslinked polymer product. The conductive core may be linear shape (e.g., like a wire) having a length and proximal and distal ends spaced apart from each other by the length of the linear shape; and the polymeric layer may surround the conductive core except for the proximal and distal ends. The coated conductor may further comprise one or more additional polymeric layers, which independently may or may not comprise the cured polymer product; and/or an outer shielding layer (e.g., a metal sheath or sleeve). The coated conductor may comprise one or two insulation layers, at least one of which comprises the homogeneous mixture or the cured or crosslinked polymer product; alternatively or additionally one or two semiconductive layers, at least one of which comprises the homogeneous mixture or the cured or crosslinked polymer product containing a carbon black; alternatively or additionally an outer shielding layer, which comprises the cured polymer product.

Liquid means an amorphous state of matter intermediate between a gas and a solid and having a stable volume, but not a defined shape. Liquid means state of matter of a substance where the substance flows freely, but has a constant volume, like, for example, water or an oil. Other states of matter include solid and gas.

Solid means a state of matter having a stable volume and defined shape. May be amorphous, crystalline, or semi-crystalline.

The terms liquid, solid, and gas are used to characterize a substance's state of matter when at room temperature, e.g., from 19° to 26° C. Conventionally, a substance is said to be a "liquid" if the substance flows freely, but has a constant volume at room temperature.

To enable characterizations and comparisons, room temperature herein is defined as 23° ± 1° C., alternatively 23° C.

The use of the term "liquid" in the expressions "liquid additive", "liquid heat stabilizer", and "liquid plasticizer" of the present disclosure is somewhat different than the conventional use described in the preceding paragraph. In the present disclosure, the term "liquid" in the expressions "liquid additive", "liquid heat stabilizer", and "liquid plasticizer" is used to describe the operating state of matter of the additive, heat stabilizer, or plasticizer, respectively, at the operating temperature of the heterogeneous mixture during the applying acoustic energy step. Such an operating temperature may be less than room temperature (e.g., less than 22° C.), at room temperature (23° ± 1° C.), or greater than room temperature (e.g., greater than 24° C.). The present disclosure includes using as liquid additives, liquid heat stabilizers, and/or liquid plasticizers substances that are solutions of liquid or solid additives dissolved in a liquid or a solvent or are used in neat form (purity from 95 to 100 wt%, alternatively from 98 to 100 wt%, alternatively purity 99.0 to 100.0 wt%) and in neat form independently are liquids or lower-melting solids (including waxes) at 23° ± 1° C. when the operating temperature of the heterogeneous mixture during the applying step is greater than room temperature (e.g., greater than 24° C.) with the proviso that the lower-melting solids have a melting temperature that is less than the operating temperature of the heterogeneous mixture during the applying acoustic energy step. In some aspects the liquid additive comprising the liquid heat stabilizer and/or the liquid plasticizer is a liquid at 23° ± 1° C. In other aspects the liquid additive comprising the liquid heat stabilizer and/or the liquid plasticizer is a lower-melting solid at 23° ± 1° C. and the operating temperature of the heterogeneous mixture during the applying acoustic energy step is greater than 24° C.

Melting means changing a material from a solid state of matter to a liquid state of matter. Typically, melting means the changing is complete such that the liquid state of matter contains no unmelted solid form of the material. The temperature of a material at which the material is to be characterized as a solid or a liquid is 20° C.

Solidifying means changing a material from a liquid state of matter to a solid state of matter. Typically, solidifying means the changing is complete such that the solid state of matter contains no unsolidified form of the material.

Any compound, composition, formulation, mixture, or product herein may be free of any one of the chemical elements selected from the group consisting of: H, Li, Be, B, C, N, O, F, Na, Mg, Al, Si, P, S, Cl, K, Ca, Sc, Ti, V, Cr, Mn, Fe, Co, Ni, Cu, Zn, Ga, Ge, As, Se, Br, Rb, Sr, Y, Zr, Nb, Mo, Tc, Ru, Rh, Pd, Ag, Cd, In, Sn, Sb, Te, I, Cs, Ba, Hf, Ta, W, Re, Os, Ir, Pt, Au, Hg, TI, Pb, Bi, lanthanoids, and actinoids; with the proviso that any required chemical elements (e.g., C and H required by a polyolefin; or Hf required by M = Hf) are not excluded. In some embodiments having an excluded chemical element, the excluded chemical element includes Pb.

Alternatively precedes a distinct embodiment. ASTM means the standards organization, ASTM International, West Conshohocken, Pennsylvania, USA. Any comparative example is used for illustration purposes only and shall not be prior art. Free of or lacks means a complete absence of; alternatively not detectable. ISO is International Organization for Standardization, Chemin de Blandonnet 8, CP 401 - 1214 Vernier, Geneva, Switzerland. IUPAC is International Union of Pure and Applied Chemistry (IUPAC Secretariat, Research Triangle Park, North Carolina, USA). May confers a permitted choice, not an imperative. Operative means functionally capable or effective. Optional(ly) means is absent (or excluded), alternatively is present (or included). PAS is Publicly Available Specification, Deutsches Institut für Normunng e.V. (DIN, German Institute for Standardization) Properties may be measured using standard test methods and conditions. Ranges include endpoints, subranges, and whole and/or fractional values subsumed therein, except a range of integers does not include fractional values. Room temperature: 23° C. ± 1° C.

Terms used herein have their IUPAC meanings unless defined otherwise. See Compendium of Chemical Terminology. Gold Book, version 2.3.3, February 24, 2014.

### EXAMPLES

Polyvinyl chloride solids (A)-1: a PVC powder having a K-value of 65. Available as Formolon 622S suspension-grade PVC homopolymer (Formosa Plastics, USA).

Polyvinyl chloride solids (A)-2: a PVC powder having a K-value of 70. Available as OxyVinyls 240F suspension-grade PVC homopolymer (OxyVinyls LP, USA).
(B)-1: a liquid additive that is a liquid heat stabilizer comprising composition of approximately 80 wt% dimethyltin bis(2-ethylhexyl mercaptoacetate) and approximately 20 wt% monomethyltin tris(2-ethylhexyl mercaptoacetate), as described in US 3,887,519. Available as ADVASTAB TM181-FS metal mercaptide (PMC Group, USA).
(B)-2: a solid additive that is a solid heat stabilizer comprising composition described in US 8,859,654 B2 as Baeropan MC 90249 KA calcium-zinc mixed metal soap (Baerlocker, USA).
(C)-1: a liquid additive that is a liquid plasticizer that is diisodecyl phthalate, DIDP.
(D)-1: a solid filler that is a calcined kaolin clay (Satintone SP-33).
(E)-1: a liquid additive that is a low-melting solid antioxidant that is stearyl 3-(3,5-di-t-butyl-4-hydroxyphenyl)propionate having a melting range from 50° to 55° C. (IRGANOX 1076).
   K-Value: an empirical parameter related to intrinsic viscosity and related to molecular mass of a material, particularly the PVC solids. The present K-value is measured according to the test method of ISO 1628, part 2: 1998 *Plastics - Determination of the viscosity of polymers in dilute solution using capillary viscometers - Part 2: Poly(vinyl chloride) resins.*
   Shore D Hardness: measured according to ASTM D2240 at 23 C. using specimens having a thickness of 6.4 millimeters (mm) and diameter of 51 mm.
   Tensile Strength: measured according to ASTM D638 and UL 1581/2556 at a displacement rate of 51 millimeters per minute (mm/min.) using a Type IV dog bone-shaped specimen of approximately 0.9 mm thickness.
   Inventive Example 1 (IE1): (actual) inventive dry-blending process is used to make inventive homogeneous mixture 1: Apply acoustic energy using a Resodyn^{™} Acoustic Mixer (Lab RAM Mixer) to a heterogeneous mixture of ingredients resin (A)-1 PVC solids (Formolon 622S suspension-grade PVC homopolymer, at room temperature, i.e., not preheated) and (B)-1 liquid heat stabilizer (ADVASTAB TM181-FS metal mercaptide, at room temperature, i.e., not preheated) until absorption of the (B)-1 into the (A)-1 PVC solids is observed by naked eye to be complete (i.e., liquid (B)-1 was no longer visible on the surface of (A)-1)-which occurred within 2 minutes---to give an inventive homogeneous mixture 1 comprising 100.0 weight parts of PVC solids resin that is (A)-1 and 1.5 part hundred resin (phr) of (B)-1 liquid heat stabilizer.
   Inventive Example 2 (IE2): ): (actual) inventive dry-blending process is used to make inventive homogeneous mixture 2: Preheat separately inventive homogeneous mixture 1 of IE1 and (C)-1 liquid plasticizer (DIDP) at 110° C. in a convection oven. Add the preheated inventive homogeneous mixture 1, 43.7 phr of preheated (C)-1, and 0.44 phr of (E)-1 antioxidant into a glass jar. Apply acoustic energy using a Resodyn^{™} Acoustic Mixer (Lab RAM Mixer) to jar's contents at room temperature until absorption of the (C)-1 into the inventive homogeneous mixture 1 is observed by naked eye to be complete (i.e., liquid (C)-1 was no longer visible on the surface of inventive homogeneous mixture 1-which occurred within 2 to 3 minutes---to give an inventive homogeneous mixture 2 comprising 100.0 weight parts of resin that is (A)-1, 1.5 phr of (B)-1 liquid heat stabilizer, 43.7 phr (C)-1 liquid plasticizer, and 0.44 phr (E)-1 liquid antioxidant. The composition of homogeneous mixture 2 is 68.7 wt % PVC solids (A)-1, 30.0 wt % liquid plasticizer (C)-1 (DIDP), 1.0 wt % liquid heat stabilizer (B)-1, and 0.3 wt % antioxidant (E)-1. Compression mold the inventive homogeneous mixture 2 into thin sheets or specimens. Die-cut the cooled sheets to geometries for tensile measurements of tensile strength and tensile elongation. Test the uncut compression molded specimens for hardness measurements.

**Table 1: Dry-blend compositions of Comparative Example 1 and Inventive Examples 1 and 2 and method and test results.**

| Ex. No. | IE1 | IE2 |
|---|---|---|
| hPVC solids (A)-1 (parts) | 100 | 100 |
| Liquid heat stabilizer (B)-1 (phr) | 1.5 | 1.5 |
| Liquid plasticizer (C)-1 (phr) | 0 | 43.7 |
| Antioxidant (E)-1 (phr) | 0.44 | 0.44 |
| Total parts | 101.94 | 145.64 |
| Appearance of Blend | Dry | Dry |
| Acoustic mixing frequency (Hz) | 60 | 60 |
| Blending time to achieve dry appearance (minutes) | 2 | 2 to 3 |
| Tensile Strength (MPa) | N/m | 21.6 |
| Tensile Elongation (%) | N/m | 343 |
| Hardness, Shore D | N/m | 48 |

In Table 1, N/m means not measured. As shown in IE1, the mechanical agitation-free method achieved a homogeneous mixture (also called a dry blend) of the PVC solids and liquid heat stabilizer. The method is 1.3 to 9 times faster than mechanical agitation as reported by Chaudhary et al. I.e., the method achieves complete mixing in 75% to 11 % of the time required by mechanical agitation of Chaudhary et al. The inventive acoustic mixing steps of IE1 and IE2 completely infused the liquid plasticizer into the PVC solids without melting the PVC solids. Further, after compression molding specimens, the inventive homogeneous mixture of IE2 has useful tensile strength and tensile elongation, and hardness.

Inventive Example 3 (prophetic). inventive dry-blending process is used to make inventive homogeneous mixture 3: Preheat inventive homogeneous mixture 2 of IE2 and 5 phr particulate solid additive (D)-1 (calcined kaolin clay) at 90° C. in a convection oven. Add the preheated materials into a glass jar. Apply acoustic energy using a Resodyn^{™} Acoustic Mixer (Lab RAM Mixer) to jar's contents at room temperature until absorption of the (D)-1 into the (A)-1 PVC solids is observed by naked eye to be complete to give inventive homogeneous mixture 3 comprising (A)-1, (B)-1, (C)-1, and (D)-1. The inventive homogeneous mixture 3 may be compression molded into thin sheets or specimens, and tested for tensile strength, tensile elongation, and Shore D hardness.

Inventive Examples 4 to 5 (prophetic): replicate the procedures of IE2 to IE3, respectively, except use (A)-1 PVC solids in place of the inventive homogeneous mixture 1 (i.e., the (B)-1 liquid heat stabilizer step is omitted) to give inventive homogeneous mixtures 4 and 5, respectively, that are free of liquid heat stabilizer.

Inventive Examples 6 to 8 (prophetic): replicate the procedures of IE1 to IE3, respectively, except use (A)-2 PVC solids in place of the (A)-1 PVC solids to give inventive homogeneous mixtures 6 to 8, respectively.

Inventive Examples 9 to 11 (prophetic): replicate the procedures of IE1 to IE3, respectively, except use (B)-2 liquid heat stabilizer in place of the (B)-1 liquid heat stabilizer to give inventive homogeneous mixtures 9 to 11, respectively.

## Claims

1. A mechanical agitation-free method of making a homogeneous mixture of polyvinyl chloride solids and a liquid additive and/or particulate solid additive without melting the polyvinyl chloride solids during the making, the mechanical agitation-free method comprising applying acoustic energy at a frequency of from 20 to 100 hertz (Hz) to a first heterogeneous mixture comprising the polyvinyl chloride solids and the liquid additive and/or particulate solid additive for a period of time that is effective to substantially intermix the polyvinyl chloride solids and the liquid additive and/or particulate solid additive while maintaining temperature of the first heterogeneous mixture above the freezing point of the liquid additive, below the melting point of the particulate solid additive, and below the melting temperature of the polyvinyl chloride solids, thereby making a first homogeneous mixture comprising the polyvinyl chloride solids and the liquid additive and/or particulate solid additive without mechanically agitating or melting the polyvinyl chloride solids.

2. The method of claim 1 wherein the liquid additive is a liquid heat stabilizer, a liquid plasticizer, a liquid antioxidant, a liquid flame retardant, or a combination of any two or more thereof.

3. The method of claim 1 wherein the liquid additive is a liquid heat stabilizer or a liquid plasticizer, or a combination thereof.

4. The method of any one of claims 1 to 3 wherein the applying step is **characterized by** any one of features (i) to (v): (i) the frequency is from 50 to 70 Hz; (ii) the period of time is from 0.5 minute to 4 hours; (iii) both (i) and (ii); (iv) the maintaining temperature of the first heterogeneous mixture below the melting temperature of the polyvinyl chloride solids comprises maintaining temperature of the first heterogeneous mixture at from 10° to 119° C.; and (v) both (iv) and any one of (i) to (iii).

5. The method of any one of claims 1 to 4 wherein the polyvinyl chloride solids of the first heterogeneous mixture are **characterized by** a physical form that is a powder, flakes, granules, pellets, or a combination of any two or more thereof and by a melting temperature that is from 100° to 260° C.; and the liquid additive is **characterized by** a freezing point of less than 20° C. or by a melting point from 20° to 99° C.; and the first heterogeneous mixture is maintained at a temperature greater than the freezing point or melting point of the liquid additive and less than 119° C. during the applying step.

6. The method of any one of claims 1 to 5 wherein the polyvinyl chloride composition of the polyvinyl chloride solids comprises: a polyvinyl chloride homopolymer (hPVC); a chlorinated poly(vinyl chloride) polymer (CPVC); or a blend of from 51 to 99.99 wt% hPVC and from 0.01 to 49 wt% of a polymer selected from CPVC and a polyolefin.

7. The method of any one of aspects 1 to 6, having any one of limitations (i) to (iv): (i) wherein the liquid additive is a liquid heat stabilizer that is a calcium zinc mixed metal fatty acid carboxylate or a metal mercaptide; (ii) wherein the liquid additive is a liquid plasticizer that is a liquid carboxylic ester that is free of a sulfur atom and a phenolic hydroxyl group; (iii) wherein the liquid additive is a liquid plasticizer that is a liquid epoxidized fatty acid ester; and (iv) a combination of any two or three of (i) to (iii).

8. The method of any one of claims 1 to 7 wherein the liquid additive is a liquid plasticizer, wherein the liquid plasticizer is selected from: a liquid acetyl trialkyl citrate, a liquid alkyl benzoate, a liquid dialkyl adipate, a liquid dialkyl azelate, a liquid dialkyl cyclohexane-dicarboxylate, a liquid dialkyl maleate, a liquid dialkyl phthalate, a liquid dialkyl sebacate, a liquid dialkyl terephthalate, a liquid trialkyl citrate, a liquid trialkyl trimellitate, and a combination of any two or more thereof.

9. The method of any one of claims 1 to 8 wherein the particulate solid additive is selected from a solid heat stabilizer; a solid silanol condensation catalyst; a solid antioxidant; a solid colorant; a solid scorch retardant; a solid stabilizer for stabilizing the homogeneous mixture against effects of ultraviolet light (UV stabilizer); a solid processing aid; a solid flame retardant; a solid polymer that is not a PVC resin; a solid organic peroxide; a solid crosslinking coagent; and a solid moisture generator agent.

10. The method of any one of claims 1 to 9 wherein the liquid additive is a liquid at 23° ± 1° C. and wherein the particulate solid additive is a solid at 23° ± 1° C.

11. The method of any one of claims 1 to 9 wherein the liquid additive is a lower-melting solid additive having a melting point from 25° to 110° C., the method further comprising, before the applying step, making the first heterogeneous mixture by contacting the polyvinyl chloride solids with the lower-melting solid additive so as to make a heterogeneous solids pre-mixture, and melting the lower-melting solid additive without melting the polyvinyl chloride solids so as to make the first heterogeneous mixture.

12. The method of any one of claims 1 to 11 comprising a step of contacting the first homogeneous mixture with the particulate solid additive that is different than the polyvinyl chloride solids to make a second heterogeneous mixture comprising the first homogeneous mixture and the at least one particulate solid additive; and then applying acoustic energy at a frequency of from 20 to 100 Hz that is effective to substantially intermix the same while maintaining temperature of the second heterogeneous mixture above the freezing point of the liquid additive, below the melting point of the particulate solid additive, and below the melting temperature of the polyvinyl chloride solids, thereby making a second homogeneous mixture comprising the polyvinyl chloride solids, the liquid additive and/or the at least one particulate solid additive, without mechanically agitating or melting the polyvinyl chloride polymer solids during the making steps.

13. The method of any one of claims 1 to 12 further comprising a subsequent step of melting the polyvinyl chloride solids of the homogeneous mixture to make a melt mixture; shaping the melt mixture to give a shaped melt mixture; and cooling the shaped melt mixture to give a shaped solid.

14. The method of any one of claims 1 to 13 wherein the first heterogeneous mixture is free of colorant.

15. The method of any one of claims 1 to 14 wherein the first heterogeneous mixture consists of the polyvinyl chloride solids and the liquid additive and/or particulate solid additive.

## Patentansprüche

1. Verfahren ohne mechanisches Rühren zum Herstellen einer homogenen Mischung aus Polyvinylchloridfeststoffen und einem flüssigen Zusatzstoff und/oder partikulären festen Zusatzstoff ohne Schmelzen der Polyvinylchloridfeststoffe während der Herstellung, wobei das Verfahren ohne mechanisches Rühren die Beaufschlagung von Schallenergie mit einer Frequenz von 20 bis 100 Hertz (Hz) auf eine erste heterogene Mischung, umfassend die Polyvinylchloridfeststoffe und den flüssigen Zusatzstoff und/oder partikulären festen Zusatzstoff, über einen Zeitraum umfasst, der ausreicht, um die Polyvinylchloridfeststoffe und den flüssigen Zusatzstoff und/oder partikulären festen Zusatzstoff im Wesentlichen zu vermischen, während die Temperatur der ersten heterogenen Mischung über dem Gefrierpunkt des flüssigen Zusatzstoffes, unter dem Schmelzpunkt des partikulären festen Zusatzstoffes und unter der Schmelztemperatur der Polyvinylchloridfeststoffe gehalten wird, wodurch eine erste homogene Mischung, umfassend die Polyvinylchloridfeststoffe und den flüssigen Zusatzstoff und/oder partikulären festen Zusatzstoff, ohne mechanisches Rühren oder Schmelzen der Polyvinylchloridfeststoffe hergestellt wird.

2. Verfahren nach Anspruch 1, wobei der flüssige Zusatzstoff ein flüssiger Wärmestabilisator, ein flüssiger Weichmacher, ein flüssiges Antioxidationsmittel, ein flüssiges Flammschutzmittel oder eine Kombination von zwei oder mehr davon ist.

3. Verfahren nach Anspruch 1, wobei der flüssige Zusatzstoff ein flüssiger Wärmestabilisator oder ein flüssiger Weichmacher oder eine Kombination davon ist.

4. Verfahren nach einem der Ansprüche 1 bis 3, wobei der Beaufschlagungsschritt **gekennzeichnet ist durch** eines der Merkmale (i) bis (v): (i) die Frequenz beträgt von 50 bis 70 Hz; (ii) der Zeitraum beträgt von 0,5 Minuten bis 4 Stunden; (iii) sowohl (i) als auch (ii); (iv) das Halten der Temperatur der ersten heterogenen Mischung unter der Schmelztemperatur der Polyvinylchloridfeststoffe umfasst das rHalten der Temperatur der ersten heterogenen Mischung bei 10 bis 119 °C; und (iv) sowohl (iii) als auch eines von (i) bis (ii).

5. Verfahren nach einem der Ansprüche 1 bis 4, wobei die Polyvinylchloridfeststoffe der ersten heterogenen Mischung **gekennzeichnet sind durch** eine physische Form, bei der es sich um ein Pulver, Flocken, ein Granulat, Pellets oder eine Kombination von zwei oder mehr davon handelt, und durch eine Schmelztemperatur, die von 100 °C bis 260 °C beträgt; und der flüssige Zusatzstoff **gekennzeichnet ist durch** einen Gefrierpunkt von unter 20 °C oder durch einen Schmelzpunkt von 20° bis 99 °C; und die erste heterogene Mischung während des Beaufschlagungsschritts bei einer Temperatur gehalten wird, die über dem Gefrierpunkt oder Schmelzpunkt des mindestens einen flüssigen Zusatzstoffs und unter 119 °C liegt.

6. Verfahren nach einem der Ansprüche 1 bis 5, wobei die Polyvinylchloridzusammensetzung aus den Polyvinylchloridfeststoffen umfasst: ein Polyvinylchloridhomopolymer (hPVC); ein chloriertes Poly(vinylchlorid)polymer (CPVC); oder eine Mischung aus 51 bis 99,99 Gew.-% hPVC und 0,01 bis 49 Gew.-% eines Polymers, das aus CPVC und einem Polyolefin ausgewählt ist.

7. Verfahren nach einem der Ansprüche 1 bis 6, das eine der Einschränkungen (i) bis (iv) aufweist: (i) wobei der flüssige Zusatzstoff ein flüssiger Wärmestabilisator ist, der ein Calcium-Zink-Mischmetallfettsäurecarboxylat oder ein Metallmercaptid ist;
(ii) wobei der flüssige Zusatzstoff ein flüssiger Weichmacher ist, der ein flüssiger Carbonsäureester ist, der frei von einem Schwefelatom und einer phenolischen Hydroxylgruppe ist; (iii) wobei der flüssige Zusatzstoff ein flüssiger Weichmacher ist, der ein flüssiger epoxidierter Fettsäureester ist; und (iv) eine Kombination von zwei oder drei von (i) bis (iii).

8. Verfahren nach einem der Ansprüche 1 bis 7, wobei der flüssige Zusatzstoff ein flüssiger Weichmacher ist, wobei der flüssige Weichmacher ausgewählt ist aus: einem flüssigen Acetyltrialkylcitrat, einem flüssigen Alkylbenzoat, einem flüssigen Dialkyladipat, einem flüssigen Dialkylazelat, einem flüssigen Dialkylcyclohexandicarboxylat, einem flüssigen Dialkylmaleat, einem flüssigen Dialkylphthalat, einem flüssigen Dialkylsebacat, einem flüssigen Dialkylterephthalat, einem flüssigen Trialkylcitrat, einem flüssigen Trialkyltrimellitat und einer Kombination von zwei oder mehr davon.

9. Verfahren nach einem der Ansprüche 1 bis 8, wobei der partikuläre feste Zusatzstoff ausgewählt ist aus einem festen Wärmestabilisator; einem festen Silanolkondensationskatalysator; einem festen Antioxidationsmittel; einem festen Farbstoff; einem festen Vorvernetzungsverzögerer; einem festen Stabilisator zum Stabilisieren der homogenen Mischung gegen die Wirkungen von ultraviolettem Licht (UV-Stabilisator); einem festen Verarbeitungshilfsmittel; einem festen Flammschutzmittel; einem festen Polymer, das kein PVC-Harz ist; einem festen organischen Peroxid; einem festen Vernetzungs-Coagens; und einem festen Feuchtigkeitserzeugungsmittel.

10. Verfahren nach einem der Ansprüche 1 bis 9, wobei der flüssige Zusatzstoff bei 23 ± 1 °C eine Flüssigkeit ist und wobei der partikuläre feste Zusatzstoff bei 23 ± 1 °C ein Feststoff ist.

11. Verfahren nach einem der Ansprüche 1 bis 9, wobei der flüssige Zusatzstoff ein niedrigschmelzender fester Zusatzstoff mit einem Schmelzpunkt von 25 bis **110** °C ist, wobei das Verfahren vor dem Beaufschlagungsschritt ferner das Herstellen der ersten heterogenen Mischung durch Inkontaktbringen der Polyvinylchloridfeststoffe mit dem niedrigschmelzenden festen Zusatzstoff, um eine heterogene Feststoffvormischung herzustellen, und Schmelzen des niedrigschmelzenden festen Zusatzstoffes ohne Schmelzen der Polyvinylchloridfeststoffe, um die erste heterogene Mischung herzustellen, umfasst.

12. Verfahren nach einem der Ansprüche 1 bis 11, umfassend einen Schritt des Inkontaktbringens der ersten homogenen Mischung mit dem partikulären festen Zusatzstoff, der sich von den Polyvinylchloridfeststoffen unterscheidet, um eine zweite heterogene Mischung herzustellen, umfassend die erste homogene Mischung und den mindestens einen partikulären festen Zusatzstoff; und dann das Beaufschlagen von Schallenergie mit einer Frequenz von 20 bis 100 Hz, die wirksam ist, um diese im Wesentlichen zu vermischen, während die Temperatur der zweiten heterogenen Mischung über dem Gefrierpunkt des flüssigen Zusatzstoffes, unter dem Schmelzpunkt des partikulären festen Zusatzstoffes und unter der Schmelztemperatur der Polyvinylchloridfeststoffe gehalten wird, wodurch eine zweite homogene Mischung hergestellt wird, umfassend die Polyvinylchloridfeststoffe, den flüssigen Zusatzstoff und/oder den mindestens einen partikulären festen Zusatzstoff, ohne mechanisches Rühren oder Schmelzen der Polyvinylchloridfeststoffe während der Herstellungsschritte.

13. Verfahren nach einem der Ansprüche 1 bis 12, ferner umfassend einen anschließenden Schritt des Schmelzens der Polyvinylchloridfeststoffe der homogenen Mischung, um eine Schmelzmischung herzustellen;
des Formens der Schmelzmischung, um eine geformte Schmelzmischung zu erhalten; und des Abkühlens der geformten Schmelzmischung, um einen geformten Feststoff zu erhalten.

14. Verfahren nach einem der Ansprüche 1 bis 13, wobei die erste homogene Mischung frei von Farbstoff ist.

15. Verfahren nach einem der Ansprüche 1 bis 14, wobei die erste heterogene Mischung aus den Polyvinylchloridfeststoffen und dem flüssigen Zusatzstoff und/oder dem partikulären festen Zusatzstoff besteht.

## Revendications

1. Procédé sans agitation mécanique de préparation d'un mélange homogène de matières solides de polychlorure de vinyle et d'un additif liquide et/ou d'un additif solide particulaire sans faire fondre les matières solides de polychlorure de vinyle pendant la préparation, le procédé sans agitation mécanique comprenant l'application d'énergie acoustique à une fréquence allant de 20 à 100 hertz (Hz) à un premier mélange hétérogène comprenant les matières solides de polychlorure de vinyle et l'additif liquide et/ou l'additif solide particulaire pendant une période qui est efficace pour mélanger sensiblement les matières solides de polychlorure de vinyle et l'additif liquide et/ou l'additif solide particulaire entre eux tout en maintenant la température du premier mélange hétérogène au-dessus du point de congélation de l'additif liquide, en dessous du point de fusion de l'additif solide particulaire, et en dessous de la température de fusion des matières solides de polychlorure de vinyle, permettant ainsi d'obtenir un premier mélange homogène comprenant les matières solides de polychlorure de vinyle et l'additif liquide et/ou l'additif solide particulaire sans agitation mécanique ni fusion des matières solides de polychlorure de vinyle.

2. Procédé selon la revendication 1, dans lequel l'additif liquide est un stabilisateur thermique liquide, un plastifiant liquide, un antioxydant liquide, un retardateur de flamme liquide, ou une combinaison de deux quelconques de ceux-ci ou plus.

3. Procédé selon la revendication 1, dans lequel l'additif liquide est un stabilisateur thermique liquide ou un plastifiant liquide, ou une combinaison de ceux-ci.

4. Procédé selon l'une quelconque des revendications 1 à 3, dans lequel l'étape d'application est **caractérisée par** l'une quelconque des caractéristiques (i) à (v) : (i) la fréquence va de 50 à 70 Hz ; (ii) la période va de 0,5 minute à 4 heures ; (iii) à la fois (i) et (ii) ; (iv) le maintien de la température du premier mélange hétérogène en dessous de la température de fusion des matières solides de polychlorure de vinyle comprend le maintien de la température du premier mélange hétérogène de 10 °C à 119 °C ; et (v) à la fois (iv) et l'une quelconque de (i) à (iii).

5. Procédé selon l'une quelconque des revendications 1 à 4, dans lequel les matières solides de polychlorure de vinyle du premier mélange hétérogène sont **caractérisées par** une forme physique qui est une poudre, des flocons, des granulés, des pastilles, ou une combinaison de deux quelconques de ces formes ou plus, et par une température de fusion qui va de 100° à 260 °C ; et l'additif liquide est **caractérisé par** un point de congélation inférieur à 20 °C ou par un point de fusion allant de 20 °C à 99 °C ; et le premier mélange hétérogène est maintenu à une température supérieure au point de congélation ou au point de fusion de l'additif liquide et inférieure à 119 °C pendant l'étape d'application.

6. Procédé selon l'une quelconque des revendications 1 à 5, dans lequel la composition de polychlorure de vinyle des matières solides de polychlorure de vinyle comprend : un homopolymère de polychlorure de vinyle (hPVC) ; un polymère de poly(chlorure de vinyle) chloré (CPVC) ; ou un mélange de 51 à 99,99 % en poids de hPVC et de 0,01 à 49 % en poids d'un polymère choisi parmi un CPVC et une polyoléfine.

7. Procédé selon l'une quelconque des revendications 1 à 6, ayant l'une quelconque des limitations (i) à (iv) : (i) dans lequel l'additif liquide est un stabilisateur thermique liquide qui est
un carboxylate d'acide gras métallique mixte calcium-zinc ou un mercaptide métallique ; (ii) dans lequel l'additif liquide est un plastifiant liquide qui est un ester carboxylique liquide qui est dépourvu d'atome de soufre et de groupe hydroxyle phénolique ; (iii) dans lequel l'additif liquide est un plastifiant liquide qui est un ester d'acide gras époxydé liquide ; et (iv) une combinaison de deux ou trois quelconques de (i) à (iii).

8. Procédé selon l'une quelconque des revendications 1 à 7, dans lequel l'additif liquide est un plastifiant liquide, dans lequel le plastifiant liquide est choisi parmi : un citrate d'acétyle et de trialkyle liquide, un benzoate d'alkyle liquide, un adipate de dialkyle liquide, un azélate de dialkyle liquide, un cyclohexane-dicarboxylate de dialkyle liquide, un maléate de dialkyle liquide, un phtalate de dialkyle liquide, un sébaçate de dialkyle liquide, un téréphtalate de dialkyle liquide, un citrate de trialkyle liquide, un trimellitate de trialkyle liquide, et une combinaison de deux quelconques de ceux-ci ou plus.

9. Procédé selon l'une quelconque des revendications 1 à 8, dans lequel l'additif solide particulaire est choisi parmi un stabilisateur thermique solide ; un catalyseur de condensation de silanol acide ; un antioxydant solide ; un colorant solide ; un retardateur de brûlure solide ; un stabilisateur solide permettant de stabiliser le mélange homogène contre les effets de la lumière ultraviolette (stabilisateur UV) ; un auxiliaire de traitement solide ; un retardateur de flamme solide ; un polymère solide qui n'est pas une résine de PVC ; un peroxyde organique solide ; un co-agent de réticulation solide ; et un agent solide générateur d'humidité.

10. Procédé selon l'une quelconque des revendications 1 à 9, dans lequel l'additif liquide est un liquide à 23 ° ± 1 °C et dans lequel l'additif solide particulaire est un solide à 23 ° ± 1 °C.

11. Procédé selon l'une quelconque des revendications 1 à 9, dans lequel l'additif liquide est un additif solide à point de fusion inférieur ayant un point de fusion allant de 25 ° à 110 °C, le procédé comprenant en outre, avant l'étape d'application, la préparation du premier mélange hétérogène en mettant en contact les matières solides de polychlorure de vinyle avec l'additif solide à point de fusion inférieur de manière à préparer un pré-mélange hétérogène de matières solides, et en faisant fondre l'additif solide à point de fusion inférieur sans faire fondre les matières solides de polychlorure de vinyle, de manière à préparer le premier mélange hétérogène.

12. Procédé selon l'une quelconque des revendications 1 à 11, comprenant une étape de mise en contact du premier mélange homogène avec l'additif solide particulaire qui est différent des matières solides de polychlorure de vinyle afin de préparer un second mélange hétérogène comprenant le premier mélange homogène et l'au moins un additif solide particulaire ; puis l'application d'énergie acoustique à une fréquence allant de 20 à 100 Hz qui est efficace pour les mélanger sensiblement entre eux tout en maintenant la température du second mélange hétérogène au-dessus du point de congélation de l'additif liquide, en dessous du point de fusion de l'additif solide particulaire, et en dessous de la température de fusion des matières solides de polychlorure de vinyle, permettant ainsi de préparer un second mélange homogène comprenant les matières solides de polychlorure de vinyle, l'additif liquide et/ou l'au moins un additif solide particulaire, sans agiter mécaniquement ou faire fondre les matières solides de polymère de polychlorure de vinyle pendant les étapes de préparation.

13. Procédé selon l'une quelconque des revendications 1 à 12, comprenant en outre une étape ultérieure de fusion des matières solides de polychlorure de vinyle du mélange homogène afin de préparer un mélange fondu ;
de façonnage du mélange fondu afin d'obtenir un mélange fondu façonné ; et de refroidissement du mélange fondu façonné afin d'obtenir un solide façonné.

14. Procédé selon l'une quelconque des revendications 1 à 13, dans lequel le premier mélange hétérogène est exempt de colorant.

15. Procédé selon l'une quelconque des revendications 1 à 14, dans lequel le premier mélange hétérogène est constitué des matières solides de polychlorure de vinyle et de l'additif liquide et/ou de l'additif solide particulaire.
